# EUROPEAN PATENT SPECIFICATION

(11) **EP 1 217 144 B1**
(45) Date of publication and mention of the grant of the patent: **10.03.2004**
(21) Application number: 01830796.7
(22) Date of filing: 21.12.2001
(51) Int. Cl.: E04F 15/02, E01C 17/00, F21S 8/02, F21V 8/00, G09F 19/22, E04B 5/46, E04C 2/54, C03C 17/04

(54) **ANTI-SKID GLASS PANE FOR CONSTRUCTION, LIGHTING ENGINEERING AND DECORATION, SPACE ILLUMINATION MODULE USING THE PANE AND METHOD FOR FABRICATING THE PANE**
RUTSCHFESTE GLASABDECKSCHEIBE FÜR KONSTRUKTION, LICHTTECHNIK UND DEKORATION, RÄUMLICHES BELEUCHTUNGSMODUL MIT DIESER SCHEIBE UND VERFAHREN ZUR HERSTELLUNG DER SCHEIBE
DALLE DE VERRE ANTIDERAPANTE POUR CONSTRUCTION, TECHNIQUE D'ILLUMINATION ET DECORATION, MODULE D'ECLAIRAGE SPATIAL UTILISANT CETTE DALLE ET PROCEDE DE FABRICATION DE CETTE DALLE

(30) Priority: 21.12.2000 IT MO000281
(43) Date of publication of application: 26.06.2002
(60) Divisional application: 03022036.2
(73) Proprietor: TECNO SECURVETRO S.r.l., 40050 Villanova Di Castenaso (Bologna) (IT)
(72) Inventor: Landi, Paolo, 40068 San Lazzaro di Savena (Bologna) (IT)
(74) Representative: Lanzoni, Luciano

(56) References cited:
- EP-A- 0 479 697
- DE-A- 2 320 862
- DE-A- 10 003 404
- DE-A- 19 719 697
- DE-C- 19 629 241
- US-A- 4 697 950

## Description

The present invention relates to a glass pane, in particular to be used as a paving element, serving anti-skid functions. The same pane can also be used in the lighting engineering sector as a diffuser of light conveyed into its thickness.

The invention further relates to a module for illuminating spaces, in particular with indirect light, using said pane and to the method for fabricating the pane.

Glass is being used more and more widely in the construction, lighting engineering and decoration field by architects and decorators. When it is used as a paving element or as a treaded surface, it would be preferable to render the surface skid-proof

Anti-skid tiles are known, obtained by sanding or etching the treaded surface. Such tiles have several drawbacks. In particular, the etchings and sanding tend to damage the surface of the glass, weakening its mechanical strength. Hence, it is not always easy to obtain efficient anti-skid surfaces.

Document DE 196 29 241 discloses a glass pane on the upper surface of which a continuous bearing layer is deposited, covering the whole surface of the pane, into which hard particles are suspended and uniformly dispersed. These particles at least partially protrude from the height of the bearing layer, so conferring anti-skid properties to the glass pane. The concentration of the hard particles in the bearing layer is such that the optical transmittance of the pane is not compromised. The hard particles may be of corundum, zirconium carbide, silicon carbide, boron nitride, diamond or titanium powder. The bearing layer is obtained by depositing onto the upper surface of the pane a fluid or paste like material containing a low melting point frit glass: The hard particles may be preventively dispersed into the fluid or paste like material before the deposition of the bearing layer, or may be distributed on the bearing layer after its deposition, when it is still in the fluid or paste like state. The solidification of the bearing layer is obtained by melting the frit glass at a temperature lower than the melting point of the hard particles and then cooling the pane.

Document DE 100 03 404 discloses a glass pane similiar to that of document DE 196 29 241, wherein the hard particles are substituted by small glass spheres which protrude from the bearing layer for not more than half of their diameter. The concentration of the glass spheres in the bearing layer is high, the spheres being allowed to be very near to each other. Again, the material of the bearing layer has a melting point which is somewhat lower than the one of the glass spheres used.

Document DE 19719 697 discloses a glass pane similiar to that of document DE 100 03 404, wherein glass beads of almost spherical shape are used, which are dispersed onto an adhesive or oily layer (to which, in turn, a certain amount of low melting point frit glass is mixed), forming a single, uniform layer of glass beads/spheres which get in contact with each other. The spheres/beads used have a diameter of up to 3 millimeters. The heat treatment applied to melt the frit glass mixed with the adhesive layer does not melt the glass beads which keep their shape unchanged. The final product has the characteristic that the glass beads almost completely protrude out of the bearing layer, having substantially only a point of contact with it, so that between the layer of glass beads (which are in contact whith each other) and the surface of the glass pane an air gap is formed for thermal insulation purposes.

In the lighting engineering sector, moreover, to illuminate spaces or other environments with indirect light, light sources are generally used which are always surrounded (posteriorly, anteriorly or completely) by casings which may also be closed, generally made of glass, which act as refractors, diffusers or combinations thereof. At the most, the light source is placed in front of the main surface of development of the diffuser, refractor element, etc.. Therefore, said systems are bulky and unsuitable for use in pavements in which a certain degree of transparency of the structure and/or of masking of the light sources from direct view is required, in addition to an indirect type of lighting.

Document US 4,697,950 discloses an illuminating stepping pad intended to be buried in the ground having a circular base including an upright continuous sidewall terminating in a circular knurled lip. A light source is operably carried on said base between a plurality of columns constituting load-bearing standoffs. A lid displaying messages, ornamental graphics or the like is removably carried on the base about the lip and may include an irregular exterior surface of non skid composition. The surface may be molded to achieve the irregularity, or a variety of compounds, such as sand, may be adhered to the surface by adhesive means. The lid is composed of translucent material allowing diffusion of the light.

The aim of the present invention is to overcome the aforesaid drawbacks, making available a glass pane with an efficient anti-skid surface and obtained in such a way as not to weaken the mechanical characteristics of the glass.

Another aim of the present invention is to make available an anti-skid glass pane which can be used effectively as a diffuser of light conveyed into its thickness, possibly able to illuminate both the underlying and the overlying space.

A further aim of the present invention is to make available a glass pane that diffuses light in a spatially selective manner and is able to highlight drawings and/or graphic symbols reproduced thereon, possibly in colour.

Yet a further aim of the present invention is to make available a method for fabricating said pane, as well as a simple and versatile space illumination module that uses it.

Said aims and others besides, which shall become more readily apparent in the course of the description that follows, are reached, in accordance with the present invention, by an anti-skid glass pane for construction, lighting engineering and decoration purposes, by a space illumination module using said pane and by a method for fabricating the pane, as characterised and described in the accompanying claims.

The invention is described in greater detail below with the aid of the drawings, which show an embodiment provided purely by way of non limiting example.
- Figures 1 and 2 show a schematic perspective view, without particular regard to proportions, of two variations of a first embodiment of the pane of the invention;
- Figures 3, 4 and 5 schematically show a section view, without particular regard to proportions, of a detail of as many embodiments of the pane of the invention;
- Figure 6 shows a schematic perspective view, without particular regard to proportions, of a first embodiment of a space illumination module using the pane of the invention;
- Figure 7 shows a section view of a detail of the module of Figure 6, with a component highlighted and presenting some variations.

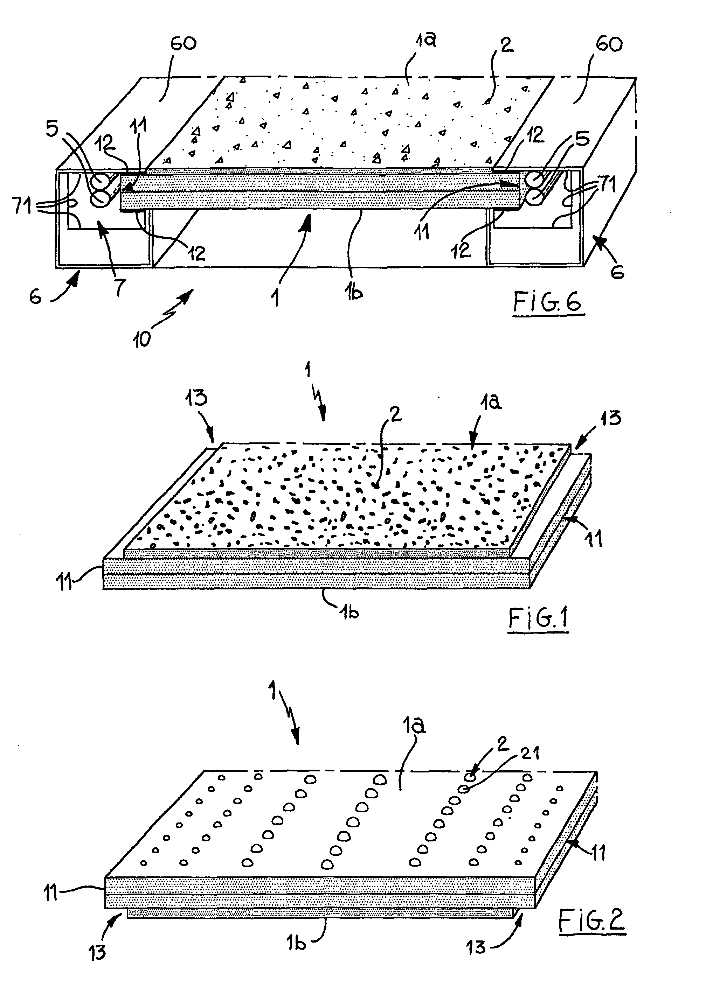

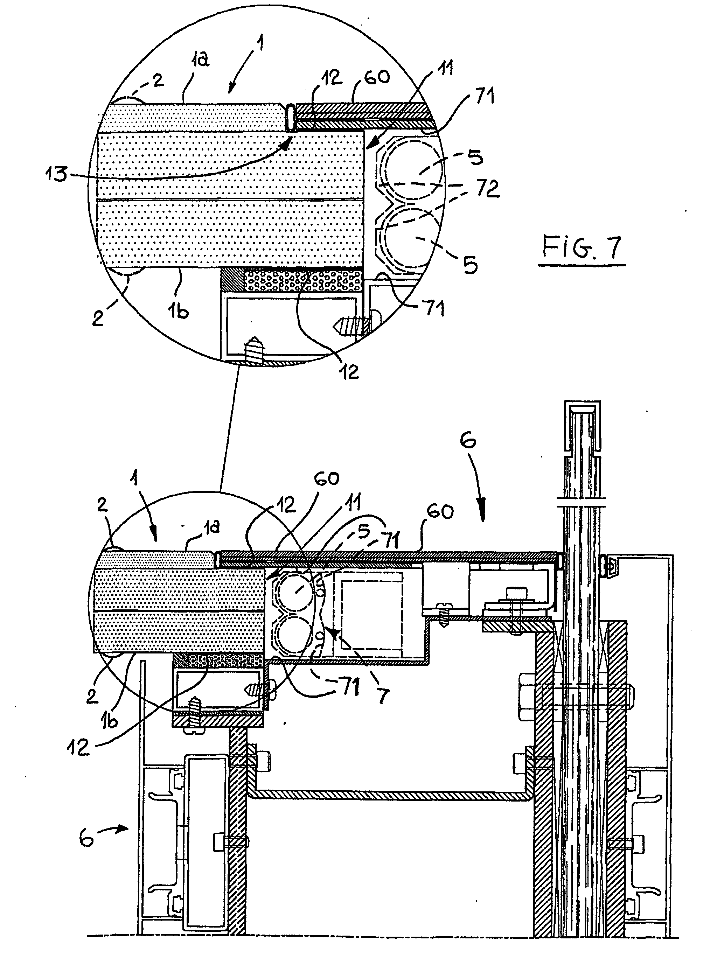

With reference to Figures 1 through 5, an anti-skid glass pane 1 for construction, lighting engineering and decoration purposes, characteristically comprises, distributed over at least one of its larger faces 1a, 1b, a plurality of small added projections 2, made of a material whose mechanical consistency is substantially comparable to that of glass and so shaped and distributed as to make skid-proof at least areas of the larger face 1a, 1b whereon they are located. The small projections 2 can have various forms. For instance also irregular forms (grit or small crystals, such as those shown in Figures 1 and 6, provided their dimensions and, especially, their average height relative to the plane of the face of the plate whereon they are added, however small, is not negligible, to allow an effective skid-proofing effect. The fact that the small projections 2 are obtained by relief, with a material whose mechanical consistency is similar to that of glass, allows to obtain a very effective skid-proofing effect without diminishing in any way the mechanical strength of the pane 1. The pane 1 can be used as an anti-skid paving element in floors, steps, walkways, pathways, etc..

In an embodiment, shown in Figure 1, the small projections 2 are distributed on the larger face 1a, 1b in a uniform manner, offering a complete anti-skid surface. Alternatively, the small projections 2 are distributed on the larger face 1a, 1b according to a predetermined design, which can be decorative or of another nature. The particular distribution of the small projections 2 is very important with respect to usage of the pane also as a spatially selective light diffuser.

Opportunely, the pane 1 is layered, i.e. composed by multiple layers joined together by thin layers of clear plastic material. In this case, the pane is made of so-called safety glass, for instance of the kind used to manufacture motor vehicle windshields.

The pane 1 can be monolithic and also tempered, also for safety reasons, but compared to a layered pane it has greater risks of injury in case of breakage. The pane 1 can have indentations 13 along the edges, for the insertion of parts of sections for mutually joining the panes 1, in such a way as to obtain anti-skid pavements without inconvenient steps, but flush on the plane. Said indentations 13 can be obtained by grinding, or by using a smaller upper glass layer in laminating the pane 1 when it is layered.

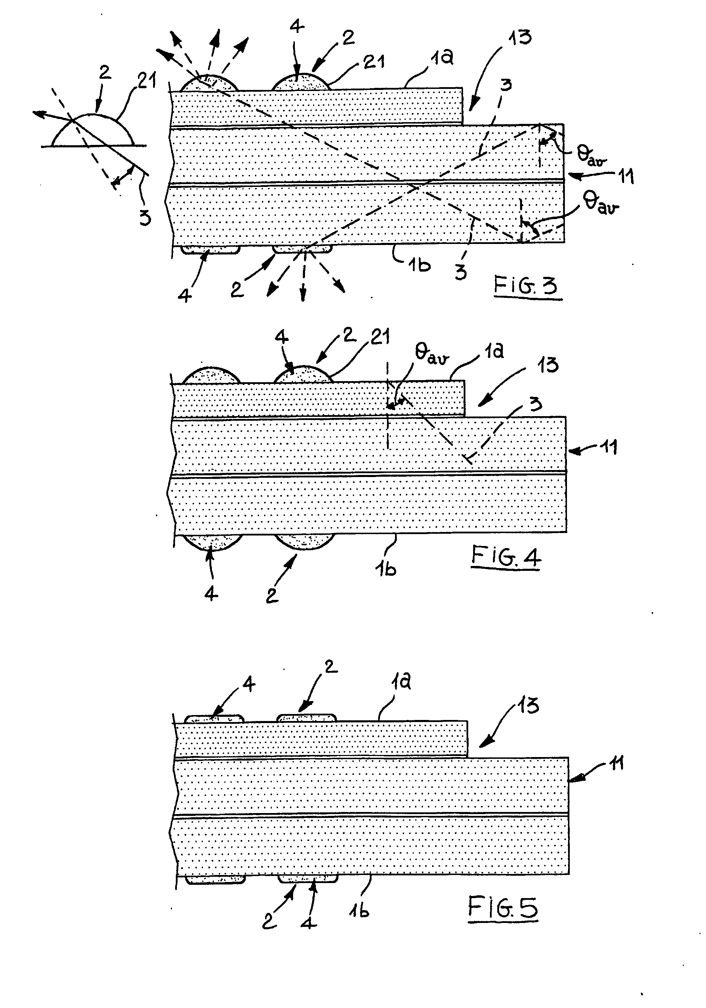

Very advantageously, the small added projections 2 are made of a material that is at least partially non light-absorbing, and so structured that light beams 3 previously conveyed into the thickness of the pane 1 itself and trapped therein by total reflection can escape outside the pane 1 mainly through them. The pane 1 thereby achieves the outward diffusion of light conveyed into its thickness and trapped therein by total reflection in a spatially selective manner. Partial transparency, combined with the characteristics of the material, similar to those of glass, allows light freely to penetrate inside the small added projections and not to be totally absorbed by them. Due to the particular structure of the small projections 2 (inherent characteristics of the material whereof they are made and of their geometry), the light beams 3 belonging to the part of said light which would remain trapped in the pane by total reflection, because of the even partial traversing of the small projections 2, find their angle of incidence altered at the interface between glass and air or between the materials whereof the small projections 2 are made (which, because its characteristics are similar, on average, to those of glass, has an average refraction index that is very close to that of glass) and air. This can allow them, during propagation, to overcome said interface and escape outwards. This phenomenon is graphically illustrated in Figure 3.

By optimising the material and/or geometric structure of the small added projections 2, it is possible to make this effect extremely selective, causing those light beams which would remain trapped in the pane 1 by total reflection to be able to escape therefrom only in correspondence with the small added projections 2. This enables, with an illumination that conveys light into the thickness of the pane, to highlight the drawing according to which the small projections 2 are distributed. As stated, its distribution can be uniform, in which case the pane will diffuse light uniformly. Alternatively, as shown for instance in Figure 2, the small projections 2 are distributed on the larger face 1a, 1b with decreasing density from the edges of the pane towards the centre. Alternatively, the particular design obtained by the distribution of the small projections 2 and highlighted by the illumination conveyed into the thickness can be a decorative motif, a signal, a safety indication, etc.. A decorative or signalling pavement is thereby obtained which diffuses light in a selective manner and is anti-skid.

As shown in Figures 3 to 5, the small projections 2 can be placed on both larger faces 1a, 1b of the pane 1. In this way, conveying light into the thickness, it is possible to obtain, by means of the part of the light that would be trapped therein by total reflection, a diffused lighting that is spatially selective both of the space overlying the pane and the space underlying the pane. In this case, advantageously, as shown always in the aforementioned figures 3-5, the small projections 2 are in correspondence with each other on the two larger faces 1a, 1b of the pane 1, although they can be different on said two faces. Obviously, it is not essential for the small projections 2 to be all identical on a larger face 1a, 1b. They can have different geometries and structures, and be made with different materials or with different characteristics.

In a preferred embodiment of the invention, inside the small projections 2 are dispersed extremely small particles 4 acting as light diffusion centres (for instance made of alumina, corundum, titanium oxide or the like.

The material of the small projections 2 can be coloured. It is thereby possible to obtain lighted multicoloured decorative or signalling motifs on the larger surfaces 1a and 1b of the pane 1.

The material of the small projections 2 can opportunely be based on re-melted glass dust, which can also be coloured as a paste, can be of float or sodic-calcic glass, aluminosilicate glass, borosilicate glass, glass containing lead, or variously modified glass. The dispersion of diffusive elements (i.e. of the small particles 4) can be constituted by materials that melt at temperatures higher than the glass transition temperature of the glass.

The small projections 2, as shown in Figure 5 (on the larger faces 1a and 1b) or in Figure 6 (on the larger face 1b) can have the shape of usual buttons.

Advantageously, in an embodiment shown in Figures 2, 3 (on the larger face la) and 4, the small projections 2 have substantially lenticular shape to allow the beams 3 to escape from the pane 1 by refractive effect. The lenticules 21 can contain the small particles 4 (in which case, the diffusive effect will combine with the refractive effect to allow the light trapped in the pane by total reflection to escape from the pane). Alternatively, as shown in detail on the left side of Figure 3, said lenticules 21 can also not contain the small particles 4, and hence operate purely by refractive effect. In this case, modifying the shape and curvature of the lenticules 21 it is possible to obtain effects whereby the emission is oriented or geometrically distributed in space, regulating the illumination of the spaces confining with the pane 1 according to desired criteria.

The small projections 2 can also have in the plane of the pane 1 any appropriate or desired shape. Their mean or maximum height can be predetermined depending on requirements, in particular according to skid-proofing and/or light diffusion efficiency. For example, if they incorporate the particles 4, the thickness and/or the height of the small projections 2 shall have to be in relation to the density of the particles 4, to allow an effective diffusing action by the particles 4. In the case of lenticular shape, the small added projections 2 may also have a planar width of a few millimetres and have a height in the order of a millimetre or even greater, depending on requirements. The shape of the small added projections 2 could also be irregular, for instance similar to that of an abrasive grit with not wholly negligible dimensions and/or appropriate grain size. In the case of skid-proof walkways for locations where water or humidity is present and whereon one can walk barefoot, such as near swimming pools, the lenticular or button form is most appropriate.

In a method for fabricating a glass pane 1 of the type described initially, one proceeds with a phase of laying on a first of the larger faces 1a, 1b of the pane 1 an adhesive primer in the positions provided for the small added projections 2. The primer can be laid using common serigraphy techniques, avoiding the drying phase, so that it will remain sticky. Subsequently, one proceeds with distributing, in substantially uniform manner over the first greater face 1a, 1b, fine grit made of material based on glass dust. Such distribution can be effected in several ways, more or less automated or manually, for instance using sieves fed with the glass dust. Immediately thereafter, once the grit has stuck on the primer, one proceeds with a phase of lifting the pane 1 sideways to eliminate the grit not captured by the adhesive primer. The grit not attached to the primer falls by gravity and it may be retrieved for a subsequent re-use.

The quantity of grit laid uniformly on the pane and the thickness of the primer depend on the height and on the characteristics required for the small added projections 2. The use of glass grit is advantageous because it can allow using ground recycled glass.

The pane 1, kept horizontal with the first face 1a, 1b oriented upwards, is then subjected to a heating phase to a temperature sufficient to melt the grit, causing it to adhere definitively to the first larger face 1a, 1b and conferring it the shape of the small added projections 2. To facilitate the process, the glass grit in use can be modified, by adding components, to lower or adjust its melting point according to requirements.

A phase of cooling the pane 1 is then carried out.

Advantageously, the heating phase takes place at temperatures suitable for tempering glass (which for float glass, for instance, generally range between 680°C and 710°C). The heating can be conducted in a normal tempering furnace, so that the pane can be tempered simultaneously with the formation and consolidation of the small projections 2. Optionally, if both sides are to be coated with projections, all the process phases for obtaining the small added projections 2 on the first larger face 1a, 1b are subsequently repeated on a second greater face 1a, 1b opposite the first. In this second part of the process, instead of using exactly the same phases as above and glass powder based grit, it is also possible to lay small added projections 2 on a second larger face 1a, 1b opposite the first by serigraphic deposition of at least light-diffusing material.

In the case of layered pane 1, the process phases for obtaining the small added projections 2 on the first and on the second larger face 1a, 1b are carried out separately on the corresponding two glass layers (the upper one and the lower one) before the mutual union of all layers composing the pane 1.

Opportunely, the composition of the glass dust based grit can be modified in such a way that the grit has such a viscosity in the melted state as to cause it to assume during heating, due to gravity and surface tension, lenticular shape in each of the positions provided for the added small elements 2. By appropriately playing with this parameter, it is possible to modify curvature and height of the lenticules 21.

The adhesive primer can be a carbomethylcellulose based material.

With the pane 1 according to the invention it is possible to obtain a space illumination module 10. With reference to Figures 6 through 8, the module 10 comprises at least a pane 1 according to the invention, supports 6 of the pane 1 acting on the edges thereof and at least a linear light source 5 housed in the support means 6 and positioned along at least a segment of at least an edge 11 of the pane 1 to convey light into the thickness of the pane 1 and determine the illumination of the space through the diffusion of the light itself from the larger faces 1a, 1b of the pane 1 mainly through the small added projections 2.

Opportunely, the linear light source 5 extends along the whole edge 11. A linear light source 5 can be associated to each of at least two mutually parallel edges 11 (as in Figure 6), or to each of at least two mutually perpendicular edges 11. All combinations are possible, including the one in which all edges 11 are lighted. As shown in the figures, to the edge 11 can also be associated at least two mutually parallel light sources 5. Advantageously, the ratio between the overall thickness of the pane 1 and the distance from the edge 11 of the linear light source 5 is such as to allow the entrance into the pane 1 through the thickness only to those light beams 3 for which the angle of incidenceθav at the interface between glass and air determined by one of the larger faces 1a, 1b is greater than a predetermined value near the value of total reflection. In this way all the light that enters remains trapped in the thickness of the pane 1 and can be diffused in the space only through the small added projections, thereby maximising selective diffusion.

Advantageously, the module 10 comprises, housed in the supports 6, light concentrating means 7 to maximise the light fraction emitted by the linear light source 5 that is conveyed in the thickness of the pane 1. The concentrator means 7 comprise at least reflecting elements 71 positioned posteriorly and around the linear light source 5, such as parabolas, shields, deflectors etc.. Said reflecting elements 7 do not necessarily have to act by specular reflection. They can also be diffusing elements. Both they and the light source can be coloured.

In addition, or alternatively, the concentrator means 7 comprise at least refractive elements 72 positioned in front of the linear light source 5, for instance cylindrical lenses with their focus in the linear light source 5, which may also be coloured or coated with appropriate filters.

Advantageously, the module 10 comprises, on each larger face 1a, 1b of the pane 1, a band 12 which totally absorbs light and is positioned adjacent to the edge 11 corresponding to the linear light source 5. Its function is to eliminate at least partially the fraction of light beams 3 coming from the linear light source 5 which are conveyed into the thickness of the pane according to propagation directions having angle of incidence θav, at the interface between glass and air determined by the larger faces 1a, 1b, that is lesser than the total reflection angle, thus enhancing the illumination contrast of the small added projections 2. Those light components are eliminated which, due to the phenomenon of multiple reflections inside the pane 1 and to their having smaller angles of incidence èav than the total reflection value, would determine an emission of light, however weak, by the entire pane 1. Said bands 12 are positioned at each edge 11 corresponding to linear light sources 5 and can also be constituted by the black silicone gaskets commonly used in aluminium windows and doors technology.

Advantageously, the ratio between the width of the bands 12 and the thickness of the pane 1 is such that all light beams 3 coming from the linear light source 5 which are conveyed into the thickness of the pane according to directions of propagation having angle of incidence θav, at the interface between glass and air determined by the larger faces 1a, 1b, lesser than the total reflection angle fall on the band 12 (and are thus eliminated). At least on a larger face 1a the bands 12 are housed between the pane 1 and wings 60 of the supports 6 in an indentation of the pane 1 for the flush insertion in the plane of the larger face 1a of said wings 60. The indentation 13 can be obtained by grinding, or by making a layered pane 1 composed by two or three monolithic layers, whereof the outermost, comprising the larger face 1a, is less extended than the others. In an embodiment (shown in the figures) the pane 1 can be obtained by layering three monolithic panes of float glass whereof two having greater thickness (for instance 20 mm) and one (which may comprise the outermost, less extended layer, thereby defining the indentations 13) having lesser thickness (for instance of 8 mm).

The module 10 can be used as a ceiling or floor element (possibly with an anti-skid and/or signalling and/or decorative function), as a partition between spaces, as an element of a walkway able to be positioned at a predetermined height in a room, in particular inside a space (exposition hall, supermarket, museum, etc.). It guarantees a safe, visible skid-proof passage and, at the same time, it can illuminate also the underlying and overlying part of the room, if the small added projections 2 are present on both larger faces 1a, 1b. Obviously, if it is not necessary to illuminate on both sides, or if the pane 1 is to be used simply as paving, it will be sufficient to use a pane 1 having the small projections 2 only on the treaded side.

The invention makes an emergency path (or escape route) clearly visible.

The invention thus conceived can be subject to numerous modifications and variations, without thereby departing from the scope of the inventive concept as described by the appended claims. Moreover, all components can be replaced with technically equivalent elements. In practice all materials used, as well as dimensions, may be any, depending on requirements.

## Claims

1. Skid-proof glass pane (1) for construction, lighting engineering and decoration purposes comprising, distributed on at least one of its two larger faces (1a, 1b), a plurality of small added projections (2) so shaped and distributed as to render skid-proof at least areas of the larger face (1a, 1b) whereon they are located, the small added projections (2) being made of a material whose mechanical consistency is substantially comparable to that of glass and which is at least partially non light absorbing, **characterised in that**, in combination, the small added projections (2) are directly applied onto the glass pane (1), are made of a material having an average refraction index that is very close to that of glass, and are so structured that light beams (3), previously conveyed in the thickness of the pane (1) itself and having an angle of incidence (θav) at the interface between glass and air determined by one of the larger faces (1a,1b) of the glass pane (1) greater than or equal to the angle of total reflection between glass and air so that they would be trapped in the pane (1) by total reflection, can instead escape outside the pane (1) mainly by traversing the small added projections (2) after having freely penetrated inside the small added projections (2) through that part of the larger face (1a, 1b) whereon the small added projections (2) are located which is under and in contact with the small added projections (2).

2. Pane (1) as claimed in claim 1, **characterised in that** the small projections (2) are distributed on the larger face (1a, 1b) in a uniform manner.

3. Pane (1) as claimed in claim 1, **characterised in that** the small projections (2) are distributed on the larger face (1a, 1b) according to a predetermined design.

4. Pane (1) as claimed in claim 3, **characterised in that** the small projections (2) are distributed on the larger face (1a, 1b) with decreasing density from the edges of the pane towards the centre.

5. Pane (1) as claimed in claim 2 or 3 or 4, **characterised in that** the small projections (2) are added on both larger faces (1a, 1b).

6. Pane (1) as claimed in any of the previous claims, **characterised in that** the small projections (2) have substantially lenticular shape.

7. Pane (1) as claimed in any claim from 1 through 5, **characterised in that** the small projections (2) are shaped as thin buttons.

8. Pane (1) as claimed in any of the previous claims, **characterised in that** inside the small projections (2) are dispersed very small particles (4) acting as light diffusion centres.

9. Pane (1) as claimed in any of the previous claims, **characterised in that** the material of the small projections (2) is coloured.

10. Pane (1) as claimed in any of the previous claims, **characterised in that** the material of the small projections (2) is based on re-melted glass dust.

11. Pane (1) as claimed in any of the previous claims, **characterised in that** it is layered.

12. Space illumination module (10) comprising at least a glass pane (1), supports (6) of the pane (1) acting on the edges thereof and at least a light source (5) housed in the support means (6), **characterized in that** the pane (1) is as claimed in one of the claims from 1 to 11 and the light source (5) is a linear light source positioned along at least a segment of at least an edge (11) of the pane (1) to convey light into the thickness of the pane (1) and determine the illumination of the space by diffusing the light from the larger faces (1a, 1b) of the pane (1) mainly through the added small projections (2).

13. Module (10) as claimed in claim 12, **characterised in that** the linear light source (5) extends along the entire edge (11).

14. Module (10) as claimed in claim 12 or 13, **characterised in that** to each of at least two mutually parallel edges (11) is associated a linear light source (5).

15. Module (10) as claimed in claim 12 or 13, **characterised in that** to each of at least two mutually perpendicular edges (11) is associated a linear light source (5).

16. Module (10) as claimed in any of the claims 12 through 15, **characterised in that** to the edge (11) are associated at least two mutually parallel linear light sources (5).

17. Module (10) as claimed in any of the claims 12 through 16, **characterised in that** the ratio between the overall thickness of the pane (1) and the distance from the edge (11) of the linear light source (5) is such as to allow the entrance into the pane (1) through the thickness only to those light beams (3) for which the angle of incidence (θav) at the interface between glass and air determined by one of the larger faces (1a, 1b) is greater than a predetermined value near the value of total reflection.

18. Module (10) as claimed in any of the claims 12 through 17, **characterised in that** it comprises, housed in the supports (6), means (7) for concentrating the light to maximise the fraction of light emitted by the linear light source (5) which is conveyed in the thickness of the pane (1).

19. Module (10) as claimed in claim 18, **characterised in that** the concentrator means (7) comprise at least reflecting elements (71) positioned posteriorly and about the linear light source (5).

20. Module (10) as claimed in claim 18 or 19, **characterised in that** the concentrator means (7) comprise at least refractive elements (72) positioned in front of the linear light source (5).

21. Module (10) as claimed in any of the claims 12 through 20, **characterised in that** it comprises, on each larger face (1a, 1b) of the pane (1), a band (12) that totally absorbs light and is positioned adjacent to the edge (11) corresponding to the linear light source (5), to eliminate at least partially the fraction of light beams (3) coming from the linear light source (5) which are conveyed in the thickness of the plate according to directions of propagation having angle of incidence (θav), at the interface between glass and air determined by the larger faces (1a, 1b), lesser than the total reflection angle, in order to enhance the illumination contrast of the small added projections (2).

22. Module (10) as claimed in claim 21, **characterised in that** the ratio between the width of the bands (12) and the thickness of the pane (1) is such that all light beams (3) coming from the linear light source (5) which are conveyed into the thickness of the pane according to directions of propagation having angle of incidence (θav), at the interface between glass and air determined by the larger faces (1a, 1b), lesser than the angle of total reflection fall on the bands (12).

23. Module (10) as claimed in claim 21 or 22, **characterised in that** at least on a greater face (1a) the bands (12) are housed between the pane (1) and the wings (60) of the supports (6) in an indentation (13) of the pane (1) for the insertion of said wings (60) flush in the plane of the larger face (1a).

24. Method for fabricating a glass pane (1) of the type according to any of the claims 1 through 11, comprising the following phases:
- laying an adhesive primer on one of the larger faces (1a, 1b) of the pane (1) in the positions provided for the small added projections (2);
- distributing, in substantially uniform manner over the whole first larger face (1a, 1b), fine grit made of glass dust based material;
- lifting the pane (1) sideways to eliminate the grit not captured by the adhesive primer;
- heating the pane (1), kept horizontal with the first face (1a, 1b) oriented upwards, to such a temperature as to melt the grit, making it adhere in a definitive manner to the first larger face (1a, 1b) and conferring it the shape of the added small projections (2);
- cooling the pane (1).

25. Method as claimed in claim 24, **characterised in that** the heating phase occurs at temperatures suitable for tempering glass.

26. Method as claimed in claim 24 or 25, **characterised in that** all process phases for obtaining the small projections (2) added on the first larger face (1a, 1b) are subsequently repeated on a second larger face (1a, 1b) opposite the first.

27. Method as claimed in claim 24 or 25, **characterised in that** on a second larger face (1a, 1b) opposite the first are laid small projections (2) added by means of serigraphic laying of at least light diffusing material.

28. Method as claimed in claim 26 or 27, **characterised in that**, in the case of layered pane (1) the process phases for obtaining the small projections (2) added on the first and on the second larger face (1a, 1b) are separately conducted on the corresponding two glass layers before mutually joining all the layers comprising the pane (1).

29. Method as claimed in any of the claims 24 through 28, **characterised in that** the grit has such a viscosity in the melted state as to cause it to assume during heating, by gravity and surface tension, lenticular shape in each of the positions provided for the small added projections (2).

30. Method as claimed in any of the claims 24 through 29, **characterised in that** the primer is a carbomethylcellulose based material.

## Patentansprüche

1. Rutschfeste Glasabdeckscheibe (1) für Konstruktion, Lichttechnik und Dekorationszwecke, enthaltend auf wenigstens einer ihrer beiden grösseren Flächen (1a, 1b) eine Anzahl von kleinen aufgebrachten Erhebungen (2), die so geformt und verteilt sind, dass wenigstens die Bereiche der grösseren Fläche (1a, 1b), auf welchen sie angebracht sind, rutschfest gemacht werden, wobei die kleinen aufgebrachten Erhebungen (2) aus einem Material hergestellt sind, dessen mechanische Beschaffenheit im wesentlichen mit der von Glas vergleichbar ist, und welches wenigstens zum Teil nicht lichtabsorbierend ist, **dadurch gekennzeichnet, dass** die kleinen aufgebrachten Erhebungen direkt an der Glasscheibe angeordnet sind, aus einem Material hergestellt sind, das einen durchschnittlichen Brechungsindex sehr ähnlich dem des Glases hat, und dass sie so ausgelegt sind, dass die Lichtstrahlen (3), die zuvor in die Dicke der Glasscheibe (1) selbst geleitet wurden und einen Einfallwinkel (θav) an der durch eine der grösseren Flächen (1a, 1b) der Glasscheibe (1) bestimmten Schnittfläche zwischen Glas und Luft haben, der grösser oder gleich ist wie der Winkel der gesamten Reflektion zwischen Glas und Luft, und die durch die totale Reflektion in der Scheibe (1) eingefangen sein würden, dagegen aus der Scheibe (1) austreten können, vorwiegend durch die kleinen aufgebrachten Erhebungen verlaufend, nachdem sie frei in das Innere der kleinen aufgebrachten Erhebungen (2) eingedrungen sind, und zwar durch jenen Teil der grösseren Fläche (1a, 1b), auf welcher die kleinen aufgebrachten Erhebungen (2) angebracht sind, und welcher sich unterhalb und im Kontakt mit den kleinen aufgebrachten Erhebungen (2) befindet.

2. Scheibe (1) nach Patentanspruch 1, **dadurch gekennzeichnet, dass** die kleinen Erhebungen (2) auf der grösseren Fläche (1a, 1b) auf gleichmässige Weise verteilt sind.

3. Scheibe (1) nach Patentanspruch 1, **dadurch gekennzeichnet, dass** die kleinen Erhebungen (2) auf der grösseren Fläche (1a, 1b) nach einem bestimmten Muster verteilt sind.

4. Scheibe (1) nach Patentanspruch 3, **dadurch gekennzeichnet, dass** die kleinen Erhebungen (2) auf der grösseren Fläche (1a, 1b) von den Kanten der Scheibe aus zur Mitte hin mit abnehmender Dichte verteilt sind.

5. Scheibe (1) nach Patentanspruch 2 oder 3 oder 4, **dadurch gekennzeichnet, dass** die kleinen Erhebungen (2) an beiden grösseren Flächen (1a, 1b) angeordnet sind.

6. Scheibe (1) nach einem beliebigen der vorstehenden Patentansprüche, **dadurch gekennzeichnet, dass** die kleinen Erhebungen (2) im wesentlichen linsenförmig sind.

7. Scheibe (1) nach einem beliebigen der Patentansprüche von 1 bis 5, **dadurch gekennzeichnet, dass** die kleinen Erhebungen (2) im wesentlichen die Form von dünnen Knöpfen haben.

8. Scheibe (1) nach einem beliebigen der vorstehenden Patentansprüche, **dadurch gekennzeichnet, dass** im Inneren der kleinen Erhebungen (2) sehr kleine Partikel (4) verstreut sind, die als Lichtstreuungszentren wirken.

9. Scheibe (1) nach einem beliebigen der vorstehenden Patentansprüche, **dadurch gekennzeichnet, dass** das Material der kleinen Erhebungen (2) farbig ist.

10. Scheibe (1) nach einem beliebigen der vorstehenden Patentansprüche, **dadurch gekennzeichnet, dass** das Material der kleinen Erhebungen (2) auf wieder geschmolzenem Glaspulver basiert.

11. Scheibe (1) nach einem beliebigen der vorstehenden Patentansprüche, **dadurch gekennzeichnet, dass** sie geschichtet ist.

12. Raumbeleuchtungsmodul (10), enthaltend wenigstens eine Glasscheibe (1), Halterungen (6) für die Scheibe (1), die an den Kanten derselben wirken, und wenigstens eine Lichtquelle (5), die in den Halterungen (6) angeordnet ist, **dadurch gekennzeichnet, dass** die Scheibe (1) wie die in den Ansprüchen von 1 bis 11 gekennzeichnete ist und die Lichtquelle (5) eine lineare Lichtquelle ist, angeordnet entlang wenigstens einem Segment von wenigstens einer Kante (11) der Scheibe (1), um das Licht in die Dicke der Scheibe (1) zu leiten und die Beleuchtung des Raumes durch Diffusion des Lichtes von den grösseren Flächen (1a, 1b) der Scheibe (1) hauptsächlich durch die aufgebrachten kleinen Erhebungen (2) zu bewirken.

13. Modul (10) nach Patentanspruch 12, **dadurch gekennzeichnet, dass** sich die lineare Lichtquelle (5) entlang der gesamten Kante (11) erstreckt.

14. Modul (10) nach Patentanspruch 12 oder 13, **dadurch gekennzeichnet, dass** jeder der wenigstens zwei parallel zueinander verlaufenden Kanten (11) eine lineare Lichtquelle (5) zugeordnet ist.

15. Modul (10) nach Patentanspruch 12 oder 13, **dadurch gekennzeichnet, dass** jeder der wenigstens zwei lotrecht zueinander verlaufenden Kanten (11) eine lineare Lichtquelle (5) zugeordnet ist.

16. Modul (10) nach den Patentansprüchen von 12 bis 15, **dadurch gekennzeichnet, dass** der Kante (11) wenigstens zwei parallel zueinander verlaufende Lichtquellen (5) zugeordnet sind.

17. Modul (10) nach einem beliebigen der Patentansprüche von 12 bis 16, **dadurch gekennzeichnet**, d ass das Verhältnis zwischen der gesamten Dicke der Scheibe (1) und dem Abstand der linearen Lichtquelle (5) von der Kante (11) ein solches ist, dass das Eindringen in die Scheibe (1) durch die Dicke nur jenen Lichtbündeln (3) erlaubt ist, für welche der Einfallwinkel (θav) an der Schnittfläche zwischen Glas und Luft, festgelegt durch eine der grösseren Flächen (1a, 1b), grösser ist als der vorgegebene Wert dicht an dem Wert der totalen Reflektion.

18. Modul (10) nach einem beliebigen der Patentansprüche von 12 bis 17, **dadurch gekennzeichnet, dass** es, aufgenommen in den Halterungen (6), Konzentrationsmittel (7) des Lichtes hat, um die Brechung des durch die Lichtquelle (5) ausgesandten Lichtes zu maximieren, welches in die Dicke der Scheibe (1) geleitet wird.

19. Modul (10) nach Patentanspruch 18, **dadurch gekennzeichnet, dass** die Konzentrationsmittel (7) wenigstens Reflektionselemente (71) enthalten, die hinter und um die lineare Lichtquelle (5) angeordnet sind.

20. Modul nach Patentanspruch 18 oder 19, **dadurch gekennzeichnet, dass** die Konzentrationsmittel (7) wenigstens lichtbrechende Elemente (72) enthalten, angeordnet vor der linearen Lichtquelle (5).

21. Modul (10) nach einem beliebigen der Patentansprüche von 12 bis 20, **dadurch gekennzeichnet, dass** es auf jeder grösseren Fläche (1a, 1b) der Scheibe (1) ein Band (12) enthält, welches das Licht vollkommen absorbiert und angrenzend an die der Lichtquelle (5) entsprechenden Kante (11) angeordnet ist, um wenigstens teilweise die Brechung der von der linearen Lichtquelle (5) kommenden Lichtstrahlen (3) zu vermeiden, welche nach Ausbreitungsrichtungen in die Dicke der Scheibe geleitet werden, einen Einfallwinkel (θav) an der durch die grösseren Flächen (1a, 1b) festgelegten Schnittfläche zwischen Glas und Luft haben, der geringer ist als der totale Reflektionswinkel, um den Beleuchtungskontrast der kleinen zusätzlichen Erhebungen zu erhöhen.

22. Modul (10) nach Patentanspruch 21, **dadurch gekennzeichnet, dass** das Verhältnis zwischen der Breite der Bänder (12) und der Dicke der Scheibe (1) solches ist, dass alle von der linearen Lichtquelle (5) kommenden Lichtstrahlen (3), welche nach Ausbreitungsrichtungen in die Dicke der Scheibe geleitet werden, einen Einfallwinkel (θav) an der durch die grösseren Flächen (1a, 1b) festgelegten Schnittfläche zwischen Glas und Luft haben, der geringer ist als der totale Reflektionswinkel, der auf die Bänder (12) fällt.

23. Modul (10) nach Patentanspruch 21 oder 22, **dadurch gekennzeichnet, dass** wenigstens an einer grösseren Fläche (1a) die Bänder (12) zwischen der Scheibe (1) und den Flügeln (60) der Halterungen (6) in einer Vertiefung (13) der Scheibe (1) aufgenommen sind, die zum fluchtenden Einsetzen der genannten Flügel (60) in die Ebene der grösseren Fläche (1a) dienen.

24. Verfahren zur Herstellung einer Glasscheibe (1) vom Typ nach einem beliebigen der Patentansprüche von 1 bis 11, enthaltend die folgenden Phasen:
- Aufbringen einer Klebemarkierung auf einer der grösseren Flächen (1a, 1b) der Scheibe (1) in den für die kleinen zusätzlichen Erhebungen (2) vorgesehenen Positionen;
- Verteilen auf eine im wesentlichen gleichmässige Weise über die gesamte grössere Fläche (1a, 1b) von feinem Sand aus einem auf Glaspulver basierendem Material;
- seitliches Anheben der Scheibe (1), um den nicht durch die Klebemarkierung gehaltenen Sand zu entfernen;
- Erhitzen der horizontal gehaltenen und mit der ersten Fläche (1a, 1b) nach oben gerichteten Scheibe (1) bis auf eine solche Temperatur, dass der Sand geschmolzen wird, wobei er auf eine endgültige Weise an der ersten grossen Fläche (1a, 1b) anhaftet und ihm die Form der aufgebrahten kleinen Erhebungen (2) verliehen wird;
- Abkühlen der Scheibe (1).

25. Verfahren nach Patentanspruch 24, **dadurch gekennzeichnet, dass** die Heizphase bei Temperaturen erfolgt, die zur Härtung von Glas geeignet sind.

26. Verfahren nach Patentanspruch 24 oder 25, **dadurch gekennzeichnet, dass** alle Prozessphasen zum Erhalten der kleinen Erhebungen (2), die an der ersten grösseren Fläche (1a, 1b) angebracht sind, im Anschluss an einer zweiten, von der ersten abgewandt liegenden grösseren Fläche (1a, 1b) wiederholt werden.

27. Verfahren nach Patentanspruch 24 oder 25, **dadurch gekennzeichnet, dass** an einer zweiten, von der ersten abgewandten grösseren Fläche (1a, 1b) kleine Erhebungen (2) aufgetragen werden, angebracht mit Hilfe von Siebdruckaufbringung eines wenigstens lichtverteilenden Materials.

28. Verfahren nach Patentanspruch 26 oder 27, **dadurch gekennzeichnet, dass** im Falle einer geschichteten Scheibe (1) die Prozessphasen zum Erhalten der kleinen Erhebungen (2), angebracht an der ersten und an der zweiten grösseren Fläche (1a, 1b), an den beiden Glasschichten getrennt durchgeführt werden, bevor alle die Scheibe (1) bildenden Schichten miteinander verbunden werden.

29. Verfahren nach einem beliebigen der Patentansprüche von 24 bis 28, **dadurch gekennzeichnet, dass** der Sand in geschmolzenem Zustand eine solche Viskosität hat, dass er während der Erhitzung durch Schwerkraft und Oberflächenspannung in jeder der für die kleinen Erhebungen (2) vorgesehenen Positionen eine Linsenform annimmt.

30. Verfahren nach einem beliebigen der Patentansprüche von 24bis 29, **dadurch gekennzeichnet, dass** die Klebemarkierung aus einem auf Carbomethylcellulose basierenden Material ist.

## Revendications

1. Dalle de verre antidérapante (1) pour construction, technique d'illumination et décoration comprenant, distribuée sur au moins l'une de ses deux faces plus grandes (1a, 1b), une pluralité de petites saillies rapportées (2) conformées et distribuées de manière à rendre antidérapantes au moins les aires des faces majeures (1a, 1b) sur lesquelles elles sont disposées, les petites saillies rapportées (2) étant réalisées en un matériau dont les propriétés mécaniques sont substantiellement comparables à celle du verre e qui n'est au moins partiellement pas absorbeur de lumière, **caractérisée en ce que** les petites saillies rapportées (2) sont directement appliquées sur la dalle de verre (1), sont réalisées en un matériau ayant un index de réfraction moyen très proche de celui du verre, et sont ainsi structurées que les rayons lumineux (3), auparavant convoyés à travers l'épaisseur de la dalle (1) elle-même et ayant un angle d'incidence (θav) à l'interface entre le verre et l'air déterminé par une des faces majeures (1a, 1b) de la dalle de verre (1) supérieur ou égal à l'angle de réflexion totale entre le verre et l'air de manière à ce qu'ils soient emprisonnés dans la dalle (1) par réflexion totale, puissent au contraire s'échapper hors de la dalle (1) principalement au travers des petites saillies rapportées (2) après avoir pénétré à l'intérieur des petites saillies rapportées (2) au travers de la partie de la face majeure (1a, 1b) sur laquelle les petites saillies rapportées (2) sont disposées, cette face majeure (1a, 1b) se trouvant au-dessous desdites petites saillies rapportées (2).

2. Dalle (1) selon la revendication (1), **caractérisée en ce que** les petites saillies (2) sont distribuées sur la face majeure (1a, 1b) de manière uniforme.

3. Dalle (1) selon la revendication 1, **caractérisée en ce que** les petites saillies (2) sont distribuées sur la face majeure (1a, 1b) selon un dessin prédéterminé.

4. Dalle (1) selon la revendication 3, **caractérisée en ce que** les petites saillies (2) sont distribuées sur la face majeure (1a, 1b) avec une densité décroissante depuis les bords de la dalle vers son centre.

5. Dalle (1) selon la revendication 2, 3 ou 4, **caractérisée en ce que** les petites saillies (2) sont rapportées sur les deux faces (1a, 1b).

6. Dalle (1) selon une quelconque des revendications précédentes, **caractérisée en ce que** les petites saillies (2) sont substantiellement une forme lenticulaire.

7. Dalle (1) selon une quelconque des revendications 1 à 5, **caractérisée en ce que** les petites saillies (2) sont en forme de fins boutons.

8. Dalle (1) selon une quelconque des revendications précédentes, **caractérisée en ce que** sont dispersées à l'intérieur des petites saillies (2) de très petites particules (4) agissant comme des centres de diffusion de la lumière.

9. Dalle (1) selon une quelconque des revendications précédentes, **caractérisée en ce que** le matériau des petites saillies (2) est coloré.

10. Dalle (1) selon une quelconque des revendications précédentes, **caractérisée en ce que** le matériau des petites saillies (2) est à base de poudre de verre refondue.

11. Dalle (1) selon une quelconque des revendications précédentes, **caractérisée en ce qu'**elle est stratifiée.

12. Module d'illumination ambiante (10) comprenant au moins une dalle de verre (1), des supports (6) de la dalle (1) agissant sur ses bords et au moins une source de lumière (5) logée dans les moyens de support (6), **caractérisé en ce que** la dalle (1) est conformée comme dans les revendications 1 à 11 et que la source de lumière (5) est linéaire et positionnée le long d'au moins un segment d'au moins un bord (11) de la dalle (1) pour convoyer la lumière dans l'épaisseur de la dalle (1) et déterminer l'illumination de l'environnement en diffusant la lumière depuis les faces majeures (1a, 1b) de la dalle principalement au travers des petites saillies rapportées (2).

13. Module (10) selon la revendication 12, **caractérisé en ce que** la source de lumière linéaire (5) s'étend le long de tout le bord (11).

14. Module (10) selon la revendication 12 ou 13, **caractérisé en ce qu'**est associée une source de lumière linéaire (5) a chacun des bords mutuellement parallèles (11) au moins au nombre de deux.

15. Module (10) selon la revendication 12 ou 13, **caractérisé en ce qu'**est associée une source de lumière linéaire (5) à chacun des bords mutuellement perpendiculaires (11) au moins au nombre de deux.

16. Module (10) selon une quelconque des revendications 12 à 15, **caractérisé en ce que** sont associées au moins deux sources de lumière linéaires mutuellement parallèles (5) au bord (11).

17. Module (10) selon une quelconque des revendications 12 à 16, **caractérisé en ce que** le rapport entre l'épaisseur totale de la dalle (1) et la distance des bords (11) de la source de lumière linéaire (5) è tel qu'il permet l'entrée dans la dalle (1) au travers de l'épaisseur seulement des rayons lumineux (3) pour lesquels l'angle d'incidence (θav) à l'interface entre le verre et l'air déterminé par une des faces majeures (1a, 1b) est supérieur à une valeur prédéterminée proche de la valeur de réflexion totale.

18. Module (10) selon une quelconque des revendications 12 à 17, **caractérisé en ce qu'**il comprend, logés dans les supports (6), des moyens (7) pour concentrer la lumière et maximiser la fraction de lumière émise par la source de lumière linéaire (5) qui est convoyée dans l'épaisseur de la dalle (1).

19. Module (10) selon la revendication 18, **caractérisé en ce que** les moyens de concentration (7) comprennent au moins des éléments réflecteurs (71) positionnés postérieurement et autour de la source de lumière linéaire (5).

20. Module (10) selon la revendication 18 ou 19, **caractérisé en ce que** les moyens de concentration (7) comprennent au moins des éléments réfractifs (72) positionnés en face de la source de lumière linéaire (5).

21. Module (10) selon une quelconque des revendications 12 à 20 **caractérisé en ce qu'**il comprend, sur chaque face majeure (1a, 1b) de la dalle (1), une bande (12) qui absorbe totalement la lumière et est positionnée adjacente au bord (11) correspondant à la source de lumière linéaire (5), pour éliminer au moins partiellement la fraction de rayons lumineux (3) provenant de la source de lumière linéaire (5) qui sont convoyés dans l'épaisseur de la dalle selon des directions de propagation ayant un angle d'incidence (θav), sur l'interface entre le verre et l'air déterminé par les faces majeures (1a, 1b), inférieur à l'angle de réflexion total, de manière à augmenter le contraste d'illumination des petites saillies rapportées (2).

22. Module (10) selon la revendication 21, **caractérisé en ce que** le rapport entre l'épaisseur des bandes (12) et l'épaisseur de la dalle (1) est tel que tous les rayons lumineux (3) provenant de la source de lumière linéaire (5) qui sont convoyés dans l'épaisseur de la dalle selon deux directions de propagation ayant un angle d'incidence (θav), sur l'interface entre le verre et l'air déterminé par les faces majeures (1a, 1b), inférieur à l'angle de réflexion total tombent sur les bandes (12).

23. Module (10) selon la revendication 21 ou 22, **caractérisé en ce qu'**au moins sur une surface majeure (1a) les bandes (12) sont logées entre la dalle (1) et les ailes (60) des supports (6) dans une découpe (13) de la dalle (1) pour l'insertion desdites ailes (60) de niveau dans le plan de la face majeure (1a).

24. Procédé de fabrication d'une dalle de verre (1) du type selon une quelconque des revendications 1 à 11, comprenant les phases suivantes:
- dépôt d'un apprêt adhésif sur une des faces majeures (1a, 1b) de la dalle (1) dans les positions prévues pour les petites saillies rapportées (2);
- distribution de manière substantiellement uniforme sur toute la première face majeure (1a, 1b) de grès fin de matériau à base de poudre de verre;
- soulèvement de la dalle (1) par ses côtés pour éliminer le grès non capturé par l'apprêt adhésif;
- chauffage de la dalle (1), maintenue horizontale avec la première face (1a, 1b) orientée vers le haut, à une température telle qu'elle fond le grès, en le faisant adhérer de manière définitive alla première face majeure (1a, 1b) et en lui conférant la forme des petites saillies rapportées (2) ;
- refroidissement de la dalle (1).

25. Procédé selon la revendication 24, **caractérisé en ce que** la phase de chauffage se produit à des températures adaptées à la trempe du verre.

26. Procédé selon la revendication 24 ou 25, **caractérisé en ce que** toutes les phases du procédé pour obtenir les petites saillies (2) rapportées sur la première face majeure (1a, 1b) sont ensuite répétées sur une seconde face majeure (1a, 1b) opposée à la première.

27. Procédé selon la revendication 24 ou 25, **caractérisé en ce que** sur une seconde face majeure (1a, 1b) opposée à la première sont disposées des petites saillies (2) rapportées au moyen du dépôt sérigraphique d'au moins un matériau diffusant la lumière.

28. Procédé selon la revendication 26 ou 27, **caractérisé en ce que**, dans le cas d'une dalle (1) stratifiée, les phases du procédé pour obtenir les petites saillies (2) rapportées sur la première et sur la seconde face majeure (1a, 1b) sont exécutées séparément sur les correspondantes deux couches de verre en joignant entre elles toutes les couches composant la dalle (1).

29. Procédé selon une quelconque des revendications 24 à 28, **caractérisé en ce que** le grès a une viscosité à l'état fondu telle qu'elle lui fait prendre pendant le chauffage, par gravité ou tension de surface, une forme lenticulaire dans chacune des positions prévues pour les petites saillies rapportées (2).

30. Procédé selon une quelconque des revendications 24 à 29, **caractérisé en ce que** l'apprêt est un matériau à base de carbométhylcellulose.
